# EUROPEAN PATENT APPLICATION

(11) **EP 3 034 284 A1**
(43) Date of publication of application: **22.06.2016**
(21) Application number: 14382524.8
(22) Date of filing: 16.12.2014
(51) Int. Cl.: B29C 70/54, B25J 9/16, B29C 37/02, B25J 11/00

(54) **Method and system for manufacturing of a moulded CFRP part**

(71) Applicant: Airbus Operations S.L., 28906 Getafe (Madrid) (ES)
(72) Inventor: Cebolla Garrofe, Pablo, E-28906 Getafe - Madrid (ES)
(74) Representative: ABG Patentes, S.L.

(57) **Abstract**

Method for manufacturing of a CFRP part (31,41) comprising the following steps:
- laying out one or more pre-preg or composite plies, on a mould comprising a marking tool, forming an uncured laminate with a guiding mark (32, 43) on the uncured laminate using
- curing the laminate giving the part the final shape with the guiding mark and
- trimming and/or drilling the CFRP part taking as reference the guiding mark (32, 43).

There are also provided a mould for moulding and curing a CFRP part comprising a marking tool adapted to perform a guiding mark on a fresh CFRP part, and a system for manufacturing of a moulded CFRP part.

## Description

### TECHNICAL FIELD OF THE INVENTION

The present invention relates to a method and system for manufacturing parts of an aircraft. Particularly, it relates to a method allowing trimming a CFRP part to final dimension without specific tooling and without placing the part to flight position or best fit of the deformation.

### BACKGROUND OF THE INVENTION

Most CFRP (Carbon fibre reinforced polymer) products need to be trimmed after they are ejected from a mould in which they may have been cured. After curing a CFRP part in a tool that has the final shape is intended to reach, the part is positioned in a trimming/drilling tool that brings the part to nominal position in the case when some deformation or spring back has occurred during the curing.

Usually a part is measured by probing to ensure a good positioning in a tooling and some key spots are measured. Using said measures, a machine makes a best match of the component with the theoretical component that was programmed to be trimmed. A trimming/drilling program recalculates to fit the real component with the best estimation possible in order to average the deviation of the theoretical trimming trajectories. This process involves expensive tooling, long time programming and time to re-calculate, which represents a large costs.

A solution is disclosed in US20100332016 for the reduction of costs in the program recalculating to fit the real component with the best estimation possible in which a laser device is capable of projecting at least two planes of light towards a part of an aircraft for trimming. However, this solution presents the drawback of having to adjust a laser means and to position the part in such a way that the trimming is optimal, which implies further costs.

There is consequently a need to reduce and/or eliminate as much of the trimming process tasks as possible. Such a reduction in the labour involved in trimming may also reduce injuries to workers, and may reduce the cost of secondary equipment.

### STATEMENT OF THE INVENTION

The present invention provides a solution for the aforementioned needs by a method for manufacturing a CFRP part according to claim 1, a mould for moulding and curing a CFRP according to claim 5 and a system for manufacturing of a moulded CFRP according to claim 9. Dependent claims define particular embodiments of the invention.

The method for manufacturing a CFRP part comprises the following steps:
- laying out one or more pre-preg or composite plies on a curing tool, forming an uncured laminate,
- curing the laminate giving the part the final shape and
- trimming and/or drilling the CFRP part in which there are included the following steps:
- providing a guiding mark on the uncured laminate using a mould comprising a marking tool, in such a way that the guiding mark is maintained on the cured CFRP part,
   and
- trimming and/or drilling the CFRP part taking as reference the guiding mark.

In the scope of the present invention, performing a guiding mark may be understood as drawing or tracing or marking a line or a mark or a guiding mark. Besides, a CFRP part may be an aircraft part or a CFRP piece for other purposes.

In the manufacturing of moulded CFRP parts there exists a laying up process, a curing cycle and a trimming or drilling cycle. The laying up is usually performed on a mould or a curing tool specifically adapted for being inserted into an autoclave in the curing cycle. During the curing cycle, pressure and temperature are set to a certain level for obtaining the final cured piece. Out-of-autoclave curing cycles also exist comprising setting the temperature at a specific value with no need to add pressure; therefore standard ovens may be used. At the curing cycle, part and tooling must be in a geometrical position that ensures that the part would reach the nominal geometry after cooling down. Finally, during the trimming or drilling, flash or irregularities are taken off from the cured part.

The guiding mark is provided on the uncured laminate using a mould comprising a marking tool, in such a way that the guiding mark is maintained on the cured CFRP part, and trimming and/or drilling the CFRP part is performed taking as reference the guiding mark.

Advantageously the use of a mould comprising a marking tool allows manufacturing moulded CFRP parts with a guiding mark with no need of external tooling, thus avoiding the need of specific tooling adapted for being inserted in an oven or autoclave. This allows integral tooling being available at the manufacturing time.

The guiding mark of the cured part can be a fissure or slot or a protuberance.

In an embodiment of the invention
- performing a guiding mark comprises performing a fissure or slot or protuberance in the part to be cured and
- trimming or drilling comprises following or tracking the guiding mark by optical means.

In an embodiment of the invention
- performing a guiding mark comprises performing a fissure or slot or protuberance in the part to be cured and
- trimming or drilling comprises following the guiding mark by tactile means, such as a tactile sensor.

Different alternatives advantageously provide adaptability and versatility for implementing different ways of manufacturing a CFRP part. In particular, optical or tactile means may be comprised in a movable robot which is adapted to trim the part which has been marked in the curing cycle. In the same way, the robot may comprise drilling means for drilling in some or the total number of the guiding marks performed.

The method according to the invention advantageously
- eliminates tooling need to bring a part into or close to a predetermined position. For example, if an aircraft wing is to be trimmed, a method according to the invention eliminates the need of expensive tooling to position said wing in a predetermined position on a trimming machine or unit. A robot is enough vs. expensive accurate machines;
- eliminates the high cost and lead-time for probing measurements on trimming machines; and
- reduces the cost of the machine needed.

A collateral advantage of the invention is that the use of a line marked in the tool while curing to draw the guiding mark and possible holes to be drilled allows a robot with a vision head, for example, to trim and/or drill the part to the nominal size without having to place the part in nominal conditions and adjust the trimming or drilling program to best fit the deformation. Therefore, there is no re-programing needed either after design modification.

In a second aspect of the invention there is provided a mould for moulding a CFRP part comprising a marking tool adapted to perform a guiding mark on an uncured laminate. The tool may be a drawing tool or painting tool.

In an embodiment of the second aspect of the invention the marking tool is a protuberance, such that a slot is performed on the uncured laminate.

In an embodiment of the second aspect of the invention the marking tool is a notch or slot, such that a protuberance is performed on the uncured laminate.

In an embodiment of the second aspect of the invention wherein the marking tool is a protuberance, or a notch or slot, said protuberance or slot is line shaped. This allows performing a line on the uncured laminate such that a trimming tool may be guided by said line. For example, a robot with optical or tactile means and trimming means can be guided by said line such that optimal trimming may be performed therein.

In a third aspect of the invention there is provided a system for manufacturing of a moulded CFRP part comprising a mould according to the second aspect of the invention and a trimming and/or drilling tool, wherein the trimming and/or drilling tool comprises means adapted to track a guiding mark such that the trimming is guided by said guiding mark, said means preferably being
- optical means adapted to track the mark or
- tactile means adapted to track the mark.

In an embodiment of the third aspect of the invention wherein the trimming tool comprises optical or tactile means adapted to follow a protuberance, or slot, or notch.

All the features described in this specification (including the claims, description and drawings) and/or all the steps of the described method can be combined in any combination, with the exception of combinations of such mutually exclusive features and/or steps.

### DESCRIPTION OF THE DRAWINGS

These and other characteristics and advantages of the invention will become clearly understood in view of the detailed description of the invention which becomes apparent from preferred embodiments of the invention, given just as an example and not being limited thereto, with reference to the drawings.
Figure 1A is a perspective view of a composite machining centre of the state of the art used for sections on a female tool of different shapes and sizes.
Figure 1B is a perspective view of a composite machining centre of the state of the art used for trimming of parts on a male tool.
Figure 2 is a perspective view of a mould for manufacturing a CFRP part of the invention
Figure 3 is a close view of a part with a protuberance
Figure 4 is a perspective view of a part of an aircraft with a robot comprising optical means adapted to be guided by the guiding mark

### DETAILED DESCRIPTION OF THE INVENTION

Once the object of the invention has been outlined, specific non-limitative embodiments are described hereinafter.

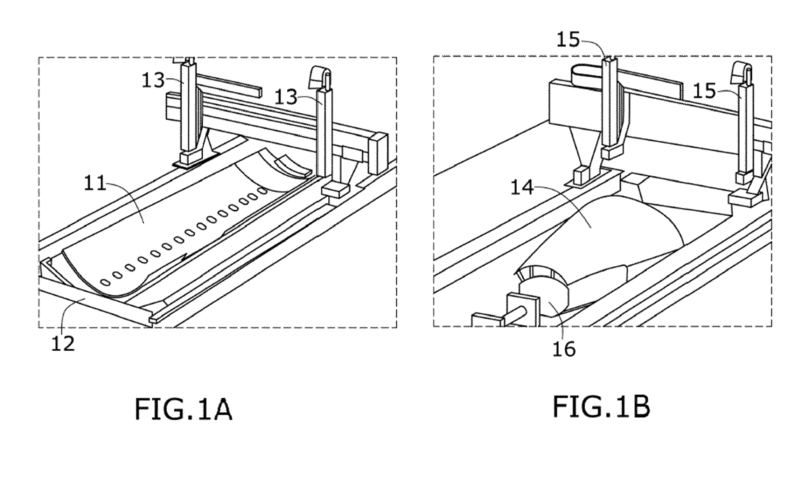

Figures 1A and 1B show models of composite machining centres of the state of the art used for trimming wings and fuselage sections of different shapes and sizes using a fixing system (12, 16) adapted to the shape of the parts (11, 14) and adapted to hold them in place throughout the entire mechanical process. As it can be seen there are several and different tools for achieving an appropriate trimming, such as robots (13, 15).

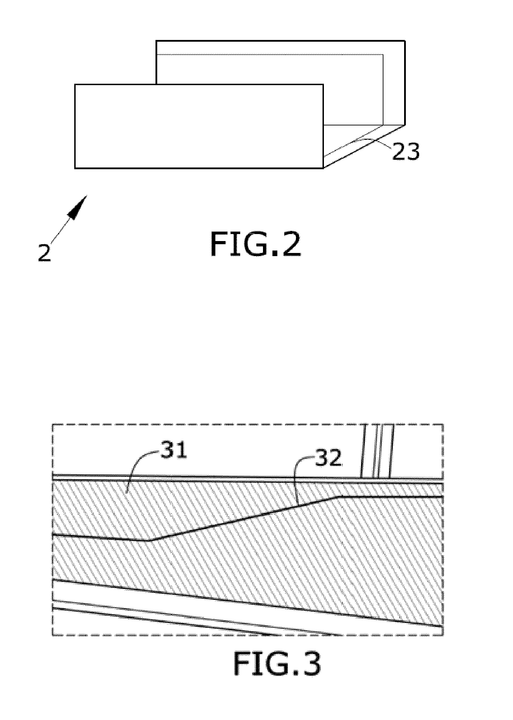

Figure 2 shows a mould (2) comprising a slot (23) for manufacturing a CFRP part in which a protuberance (32) is performed so as to obtain a mark in an uncured laminate which may be laid on said mould (2). In the case of figure 2 plies may be laid down on the mould (2) in such a way that the shape of the slot (23) is followed. In a curing cycle the plies may be cured into a part (31) comprising said protuberance (32). This result may be seen in figure 3 showing a close view of a part (31) in which a protuberance (32) is shown as a result of the part (31) having been cured in a mould comprising a slot (21) as marking tool which is line shaped.

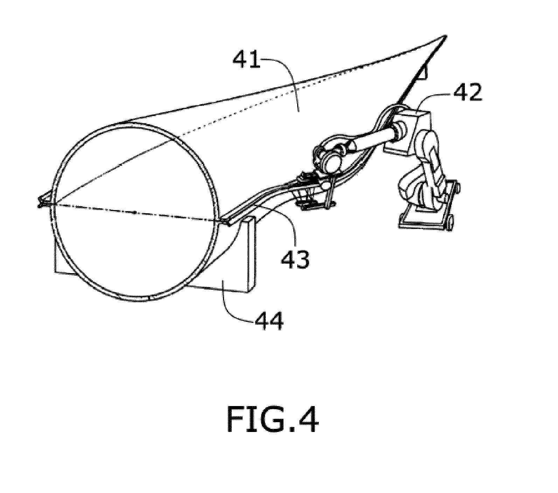

Figure 4 shows a part (41) of an aircraft, a robot (42) comprising optical means adapted to be guided by the guiding mark (43), and a holding means (44) adapted to hold the part (41). This figure shows an embodiment of a system according to the invention where the trimming is guided by said guiding mark (43) making use of optical means adapted to track the mark. Alternatively tactile means may be used. As it can be seen, the system on figure 4 is advantageously adapted to the part (41) instead of the part (41) being adapted to the trimming systems as it occurs in the state of the art. This represents a different working routine with respect to the state of the art where it is necessary in some cases to ensure a good positioning in expensive tooling, long time programming and time to re-calculate accurate parameters.

### Manufacturing method:

A method for manufacturing of a moulded CFRP part is hereinafter described in reference to figures 2, 3, 4.

A method for manufacturing a CFRP part according to the invention comprises
- a laying out cycle in which fibres of CFRP are disposed in the right position and angles on a mould (2) comprising marking tools (21, 22, 23, 24),
- a curing cycle comprising curing the layers of CFRP performing a fissure or slot or protuberance -trimming mark (32, 43)- on the part to be cured with the marking tools (21, 22, 23, 24).
- a trimming or drilling cycle comprising trimming the cured part (31) following the guiding mark (32) by optical means comprised in a movable robot (42), such that the trimming is guided by said mark (32, 43).

In another example the trimming or drilling cycle comprises following the guiding mark by tactile means, such as a tactile sensor comprised in the robot (42), such that the trimming is guided by said mark.

In another example the trimming or drilling cycle comprises following the guiding mark (32, 43) by tactile and optical means, such as a tactile sensor and optical means comprised in the robot (42), such that the trimming is guided by said mark.

Advantageously having tactile means combined with optical means provides an improved tracking of the mark (32, 43).

## Claims

1. Method for manufacturing of a CFRP part (31, 41) comprising the following steps:
- laying out one or more pre-preg or composite plies, forming an uncured laminate,
- curing the laminate giving the part the final shape and
- trimming and/or drilling the CFRP part
**characterized in that it comprises the steps of**
- providing a guiding mark (32, 43) on the uncured laminate using a mould comprising a marking tool, in such a way that the guiding mark is maintained on the cured CFRP part,
and
- trimming and/or drilling the CFRP part taking as reference the guiding mark (32, 43).

2. Method according to claim 1 wherein providing a guiding mark (32, 43) comprises performing at least a fissure or slot or protuberance in the uncured laminate.

3. Method according to any of the preceding claims wherein trimming or drilling the CFRP part taking as reference the guiding mark (32, 43) comprises tracking the guiding mark by optical means, such that the trimming or drilling is guided by said guiding mark (32, 43).

4. Method according to any of the preceding claims wherein trimming or drilling the CFRP part taking as reference the guiding mark (32, 43) comprises tracking the guiding mark by tactile means, such as a tactile sensor, such that the trimming or drilling is guided by said guiding mark (32, 43).

5. Mould (2) for moulding and curing a CFRP part (31, 41) comprising a marking tool adapted to perform a guiding mark on an uncured laminate.

6. Mould (2) according to claim 5 wherein the marking tool comprises a protuberance (21, 22) adapted to perform a slot (32) on the uncured laminate.

7. Mould (2) according to any of claims 5 or 6 wherein the marking tool comprises a notch or slot (23, 24), adapted to perform a protuberance (43) on the uncured laminate.

8. Mould (2) according to any of claims 6 or 7 wherein the protuberance (21, 22) or slot (23, 24) is line shaped.

9. System for manufacturing of a moulded CFRP part comprising a mould according to any of claims 5 to 8 and a trimming and/or drilling tool, wherein the trimming and/or drilling tool comprises means adapted to track a guiding mark such that the trimming is guided by said guiding mark, said means preferably being
- optical means adapted to track the mark or
- tactile means adapted to track the mark.
